# FASCICULE DE BREVET EUROPEEN

(11) **EP 3 925 875 B1**
(45) Date de publication et mention de la délivrance du brevet: **05.07.2023**
(21) Numéro de dépôt: 21174486.7
(22) Date de dépôt: 18.05.2021
(51) Int. Cl.: B64C 27/467, B64C 27/473

(54) **METHODE DE CONSTRUCTION D'UNE PALE DE ROTOR DESTINEE A UN GIRAVION, PALES ET GIRAVION**
VERFAHREN ZUR HERSTELLUNG EINES ROTORBLATTES FÜR EIN DREHFLÜGELFLUGZEUG, BLATT UND DREHFLÜGELFLUGZEUG
METHOD FOR CONSTRUCTING A ROTOR BLADE INTENDED FOR A ROTORCRAFT, BLADE AND ROTORCRAFT

(30) Priorité: 29.05.2020 FR 2005703
(43) Date de publication de la demande: 22.12.2021
(73) Titulaire: Airbus Helicopters, 13725 Marignane Cedex (FR)
(72) Inventeur: MADEIRA, Alexandre, 13100 AIX EN PROVENCE (FR); MALBURET, François, 13111 COUDOUX (FR); ROUCOULES, Lionel, 13760 SAINT CANNAT (FR)
(74) Mandataire: GPI Brevets

(56) Documents cités:
- EP-A1- 2 860 109
- US-A- 3 399 731
- US-A- 4 392 781
- US-A1- 2019 193 851

## Description

La présente invention est du domaine des surfaces aérodynamiques et plus particulièrement des surfaces aérodynamiques formant une voilure tournante pour giravion.

La présente invention concerne une méthode de fabrication d'une pale de rotor destinée par exemple à un giravion à grandes vitesses d'avancement par symétrie de ses profils aérodynamiques ainsi qu'une telle pale de rotor et qu'un giravion muni de telles pales.

Un giravion, désigné également « aéronef à voilure tournante », comporte traditionnellement un fuselage et au moins un rotor de sustentation assurant au moins partiellement la sustentation, voire la propulsion, du giravion. Un giravion peut aussi comporter un dispositif anticouple apte à s'opposer au couple en lacet exercé par le rotor de sustentation sur le fuselage du giravion et permettant également de contrôler les mouvements en lacet du giravion. Un dispositif anticouple comprend par exemple un rotor auxiliaire situé généralement à l'arrière du giravion, à l'extrémité d'une poutre de queue du giravion.

Un giravion peut aussi comporter une ou plusieurs hélices d'avancement, placées par exemple de part et d'autre du fuselage, et éventuellement sur une aile du giravion. Les hélices d'avancement peuvent permettre d'atteindre des très grandes vitesses d'avancement, par exemple de l'ordre de 200 à 250 noeuds, un noeud étant égal à 1.852 kilomètres par heure.

Chaque rotor, que ce soit un rotor de sustentation ou un rotor auxiliaire anticouple, comporte un moyeu tournant et plusieurs pales. Chaque pale est liée au moyeu et est entraînée en rotation par le moyeu.

Classiquement, une pale d'un rotor s'étend longitudinalement selon son envergure d'une première extrémité destinée à être fixée au moyeu vers une seconde extrémité libre. On remarque que le terme « longitudinal » se comprend comme au sens de l'envergure de la pale. De la sorte, la pale s'étend radialement par rapport au rotor de la première extrémité vers la deuxième extrémité. La pale s'étend aussi transversalement d'un bord d'attaque vers un bord de fuite de la pale.

Longitudinalement, la pale comporte un pied de pale, une zone profilée et un col de pale reliant le pied de pale à la zone profilée. Le pied de pale permet d'assurer une liaison mécanique de la pale avec le moyeu, éventuellement via un dispositif structurel de jonction, et la tenue structurelle de cette liaison mécanique. Le col de pale est une zone de transition entre le pied de pale et la zone profilée. La zone profilée assure l'essentiel des performances aérodynamiques de la pale et en particulier la portance de la pale, cette zone profilée représentant une portion plus ou moins longue de la pale. La pale comprend des sections transversales successives positionnées radialement en envergure selon un rayon rotor donné par rapport à un axe de rotation du rotor. Chaque section transversale, et en particulier de la zone profilée, peut être définie par un profil aérodynamique. Par souci de simplification, on désignera par la suite un tel profil aérodynamique par le terme « profil ».

Des profils aérodynamiques existants et utilisés fréquemment pour la zone profilée des pales des rotors de giravions sont par exemple définis selon les familles *NACA* ou bien les familles *OA,* les familles *OA* étant par exemple décrites dans les documents FR 2626841 et FR 2765187.

Le pied de pale d'une pale est relié au moyeu du rotor par un dispositif structurel de jonction qui peut être caréné afin de réduire en particulier sa traînée aérodynamique et le sillage généré. Un tel dispositif structurel de jonction caréné est désigné généralement par le terme « manchon ».

Lors de la rotation du rotor et en vol d'avancement du giravion, une pale est dite « pale avançante » lorsqu'elle tourne en se déplaçant de l'arrière du giravion vers l'avant du giravion. A contrario, une pale est dite « pale reculante » lorsqu'elle tourne en se déplaçant de l'avant du giravion vers l'arrière du giravion.

Un giravion présente l'avantage de pouvoir évoluer aussi bien à des vitesses d'avancement élevées lors de vols de croisière qu'à de très faibles vitesses d'avancement et de réaliser également des vols stationnaires. Les vitesses d'avancement d'un giravion peuvent être d'autant plus importantes lorsque le giravion comporte une ou plusieurs hélices d'avancement.

Lors de vols stationnaires ou bien à faibles vitesses d'avancement, chaque pale, qu'elle soit avançante ou bien reculante, est balayée par un flux d'air généré principalement par la rotation du rotor et, par suite, par la rotation des pales. Ce flux d'air balaie ainsi chaque pale de son bord d'attaque vers son bord de fuite ce qui génère des forces aérodynamiques, notamment une force aérodynamique de portance permettant au moins de sustenter le giravion.

Lors de vols d'avancement vers l'avant à des vitesses d'avancement plus élevées, chaque pale est balayée par un flux d'air combiné issu d'une part, de la rotation du rotor et, d'autre part, de l'avancement du giravion.

Pour une pale avançante, ces deux mouvements de rotation du rotor et d'avancement du giravion s'ajoutent de sorte que le flux d'air combiné balaie chaque pale de son bord d'attaque vers son bord de fuite.

Pour une pale reculante, ces deux flux d'air mouvements de rotation du rotor et d'avancement du giravion s'opposent et deux cas se présentent. Lorsque la vitesse locale de la pale due à la rotation de la pale est supérieure à la vitesse de translation de la pale due à l'avancement du giravion, le flux d'air combiné balaie chaque pale de son bord d'attaque vers son bord de fuite.

Lorsque la vitesse locale de la pale due à la rotation de la pale est inférieure à la vitesse de translation de la pale due à l'avancement du giravion, il y a inversion du flux d'air et le flux d'air combiné balaie chaque pale de son bord de fuite vers son bord d'attaque. Cette inversion du flux d'air se produit dans une zone particulière du rotor appelée « cercle d'inversion » par l'homme du métier.

Ce cercle d'inversion est tangent à une direction longitudinale du giravion au niveau de l'axe de rotation du rotor et couvre généralement le pied de pale, le col de pale ainsi qu'une portion plus ou moins longue de la zone profilée des pales reculantes. Le cercle d'inversion s'étend ainsi de l'axe de rotation du rotor jusqu'à un point de la zone profilée de la pale. Le rayon du cercle d'inversion est fonction de la vitesse de rotation de la pale et de la vitesse d'avancement du giravion. En particulier, ce rayon du cercle d'inversion est fonction du rapport d'avancement défini comme le rapport de la vitesse d'avancement du giravion par la composante de vitesse de l'extrémité de la pale due à la rotation seule du rotor. Plus le rapport d'avancement est élevé, plus le cercle d'inversion est grand.

De plus, pour un giravion évoluant à de très grandes vitesses, notamment lorsqu'il comporte une ou plusieurs hélices d'avancement, la vitesse de rotation du rotor de sustentation peut être réduite, ce qui tend à augmenter le rapport d'avancement et, par suite, le rayon du cercle d'inversion.

En dehors du cercle d'inversion, le flux d'air combiné balaie classiquement chaque pale, qu'elle soit avançante ou reculante, du bord d'attaque vers le bord de fuite, provoquant un comportement aérodynamique attendu de chaque pale.

Dans le cercle d'inversion, le flux d'air combiné balaie chaque pale du bord de fuite vers le bord d'attaque et le comportement aérodynamique de la pale n'est alors pas optimal.

Par exemple, ce comportement aérodynamique des pales d'un rotor de sustentation conduit à une augmentation du moment cabreur de la pale dans le cercle d'inversion ainsi qu'à une augmentation des efforts nécessaires pour commander une variation du pas des pales de ce rotor de sustentation.

De plus, un sillage peut apparaître à l'arrière d'un rotor de sustentation, ce sillage pouvant présenter des instationnarités de fortes amplitudes ainsi qu'une signature fréquentielle de type harmonique ou de type large-bande ou encore la superposition des deux. Ce sillage peut entrer en contact avec des éléments du giravion situés à l'arrière du rotor de sustentation, et peut provoquer l'apparition du phénomène connu sous l'expression en langue anglaise « tail-shake », et par suite une réduction des qualités de vol du giravion.

La zone profilée de la pale est généralement formée par une enveloppe aérodynamique dite « mince », l'épaisseur relative de chaque profil de cette enveloppe mince étant par exemple inférieure ou égale à 13%. Pour rappel, l'épaisseur relative d'un profil est le rapport entre l'épaisseur maximale de ce profil par sa corde, la corde étant la distance entre le bord d'attaque et le bord de fuite du profil.

Le col de pale et le pied de pale sont généralement formés par des enveloppes dites « épaisses », dont l'épaisseur relative est plus importante, par exemple comprise entre 20% et 100%. Le col de pale et le pied de pale n'ont pas pour fonction principale de générer une force aérodynamique de portance, mais d'assurer une raideur et une tenue mécanique de la pale tout en limitant la traînée aérodynamique générée. En particulier, le pied de pale peut être construit à partir de profils à sections quasi-rectangulaires alors que le col de pale peut être construit à partir de profils évoluant de sections quasi-rectangulaires vers des formes pseudo-elliptiques épaisses.

Par exemple, le document FR 3075757 décrit des enveloppes aérodynamiques épaisses destinées à former un col de pale ou un manchon de pales visant à améliorer le comportement aérodynamique de cette zone des pales lors de l'avancement du giravion, aussi bien lorsque la pale est avançante que reculante. Ladite enveloppe aérodynamique épaisse vise particulièrement à réduire les vibrations générées par un sillage du rotor sur une poutre de queue ou bien sur un empennage du giravion.

En outre, l'arrière plan technologique de l'invention comporte les documents EP 2860109, US 4392781 et US 3399731.

La présente invention a alors pour but de s'affranchir des limitations mentionnées ci-dessus, en proposant une méthode alternative de construction d'une pale de rotor destinée à un giravion, par exemple mais pas uniquement à grandes vitesses d'avancement, ainsi qu'une telle pale de rotor optimisée pour notamment limiter les efforts nécessaires pour commander le pas de pales ainsi qu'un giravion muni de telles pales.

La présente invention a par exemple pour objet une méthode de fabrication d'une pale pour un rotor d'un giravion selon la revendication 1, la pale s'étendant d'une part selon une direction longitudinale X en envergure d'une première extrémité destinée à être reliée à un moyeu du rotor vers une seconde extrémité libre et d'autre part selon une direction transversale Y d'un bord d'attaque vers un bord de fuite, la pale comportant un pied de pale, une zone profilée et un col de pale situé entre le pied de pale et la zone profilée, la pale comprenant une succession de profils.

Le pied de pale assure une liaison mécanique de la pale avec le moyeu et la tenue structurelle de cette liaison mécanique. Le col de pale est une zone de transition entre le pied de pale et la zone profilée. La zone profilée assure l'essentiel des performances aérodynamiques de la pale et en particulier la portance de la pale.

La méthode de fabrication d'une pale pour un rotor d'un giravion selon l'invention est remarquable en ce qu'elle comporte les étapes suivantes :
- détermination d'un tronçon de bord d'attaque de chaque profil pour le pied de pale, le col de pale et une partie centrale de la zone profilée adjacente au col de pale,
- détermination d'un tronçon de bord de fuite de chaque profil pour le pied de pale, le col de pale et la partie centrale de la zone profilée par symétrie axiale du tronçon de bord d'attaque, selon un axe de symétrie AS perpendiculaire à un segment *s* reliant ledit bord d'attaque au bord de fuite et positionné au milieu de ce segment *s*,
- détermination d'un tronçon intermédiaire d'extrados raccordant le tronçon de bord d'attaque et le tronçon de bord de fuite afin de former un extrados du profil,
- détermination d'un tronçon intermédiaire d'intrados raccordant le tronçon de bord d'attaque et le tronçon de bord de fuite afin de former un intrados du profil, et
- fabrication de ladite pale selon lesdits profils aérodynamiques.

De la sorte, la méthode selon l'invention permet d'obtenir une pale comportant, pour chaque profil de ladite partie centrale de la zone profilée ainsi que du pied de pale et du col de pale, un tronçon de bord de fuite qui est symétrique axialement au tronçon de bord d'attaque. Sur le reste de la zone profilée de la pale, le bord de fuite de chaque profil peut être par exemple effilé ou fin selon des profils classiquement utilisés pour une pale d'un rotor de sustentation ou d'un rotor auxiliaire anticouple d'un giravion.

Le comportement aérodynamique de la partie centrale de la zone profilée de la pale est ainsi sensiblement identique qu'un flux d'air balaie cette partie centrale de la zone profilée du bord d'attaque vers le bord de fuite ou bien du bord de fuite vers le bord d'attaque. De même, bien qu'il soit moins significatif, le comportement aérodynamique du pied de pale et du col de pale de la pale est également sensiblement identique qu'un flux d'air balaie le pied de pale et le col de pale du bord d'attaque vers le bord de fuite ou bien du bord de fuite vers le bord d'attaque.

En conséquence, une telle pale utilisée pour un rotor principal de sustentation d'un giravion ou bien pour un rotor auxiliaire d'un giravion peut permettre d'améliorer le comportement de la pale, du rotor équipé de telles pales, et, par suite, du giravion lors des vols d'avancement du giravion, en particulier pour des grandes vitesses, voire des très grandes vitesses.

En effet, lors des vols d'avancement, le pied de pale, le col de pale et la partie centrale de la zone profilée peuvent se trouver dans le cercle d'inversion du flux d'air balayant chaque pale. Dès lors, le pied de pale, le col de pale et la partie centrale de la zone profilée d'une pale reculante peuvent être balayés par un flux d'air combiné se déplaçant du bord de fuite vers le bord d'attaque, en fonction de la vitesse d'avancement du giravion et de la vitesse de rotation du rotor.

Le tronçon de bord de fuite qui est symétrique axialement au tronçon de bord d'attaque permet d'avoir un écoulement d'air non turbulent le long des extrados et des intrados de la portion de la pale située dans le cercle d'inversion et, par suite, d'avoir une force aérodynamique de portance générée par cette portion de la pale selon l'invention par rapport à une pale au bord de fuite effilée ou fin ou bien par rapport à une surface aérodynamique elliptique utilisée parfois pour un pied de pale ou un col de pale par exemple. De même, la force aérodynamique de traînée générée par cette portion de la pale située dans le cercle d'inversion, se trouve également réduite par la présence de ce tronçon de bord de fuite symétrique au tronçon de bord d'attaque. Le point de décrochage aérodynamique de la pale lorsqu'elle est reculante se trouve également modifié ce qui contribue à améliorer le comportement aérodynamique de la pale.

De plus, le tronçon de bord de fuite, symétrique axialement au tronçon de bord d'attaque, est plus épais qu'un tronçon de bord de fuite effilé ou fin utilisé classiquement et permet de réduire les efforts de commande du pas de la pale.

Ces améliorations sont notamment significatives pour la partie centrale de la zone profilée de la pale qui se situe dans le cercle d'inversion du rotor. Ces améliorations sont d'autant plus importantes que le rayon du cercle d'inversion est grand.

Le pied de pale, le col de pale et la partie centrale de la zone profilée, dont le tronçon de bord de fuite de chaque profil est symétrique axialement au tronçon de bord d'attaque, s'étendent ainsi dans un cercle d'inversion de rayon maximum pour le rotor du giravion auquel est destinée la pale. La partie centrale de la zone profilée est située entièrement dans ce cercle d'inversion de rayon maximum et peut s'arrêter à la périphérie du cercle d'inversion. Le rayon maximum est fonction de la vitesse maximale d'avancement du giravion et de la vitesse de rotation du rotor associée à la vitesse maximale d'avancement du giravion. La vitesse maximale d'avancement du giravion est la plus grande vitesse d'avancement que peut atteindre le giravion en vol de croisière en palier. Quelle que soit la valeur de son rayon, le cercle d'inversion est tangent à une direction longitudinale du giravion au niveau de l'axe de rotation du rotor.

Par exemple, pour un giravion dit « conventionnel », à savoir ne comportant pas d'hélice d'avancement et ayant une vitesse d'avancement maximale de l'ordre de 100 à 180 noeuds, le rayon maximum du cercle d'inversion peut être de l'ordre de 30 à 40% de l'envergure totale de la pale depuis l'axe de rotation du rotor. Pour un giravion comportant une ou plusieurs hélices d'avancement et volant à de très grandes vitesses d'avancement, par exemple de l'ordre de 200 à 250 noeuds, le rayon maximum du cercle d'inversion peut être de l'ordre de 60% de l'envergure totale de la pale depuis l'axe de rotation du rotor. La partie centrale de la zone profilée peut ainsi s'étendre jusqu'à une distance inférieure ou égale à 60% d'une envergure totale de la pale depuis l'axe de rotation dudit rotor.

On comprend donc que les améliorations apportées par l'invention sont d'autant plus importantes que la vitesse d'avancement du giravion est élevée.

La méthode de fabrication d'une pale pour un rotor d'un giravion selon l'invention peut de plus comprendre une ou plusieurs des caractéristiques qui suivent, prises seules ou en combinaison.

Selon une réalisation, la méthode de fabrication d'une pale pour un rotor d'un giravion selon l'invention peut être réalisée à partir uniquement d'un tronçon de bord d'attaque pour chaque profil du pied de pale, du col de pale et de la partie centrale de la zone profilée.

Le tronçon de bord d'attaque s'étend depuis le bord d'attaque jusqu'à un point en amont d'un point d'épaisseur maximale du profil. Le tronçon de bord d'attaque s'étend par exemple sur une distance comprise entre 20 et 45% d'une corde c du profil selon un segment *s* d'une droite reliant le bord d'attaque et le bord de fuite de chaque profil, la corde c étant égale à la distance entre le bord d'attaque et le bord de fuite.

Selon une réalisation, la méthode de fabrication d'une pale pour un rotor d'un giravion selon l'invention peut aussi s'appuyer sur un profil existant, dit « standard », le tronçon de bord d'attaque étant issu de ce profil standard. Un profil standard pour une pale de rotor de giravion peut par exemple être défini selon les familles *NACA* ou bien les familles *OA.*

Ainsi, après avoir choisi un profil standard pour la pale, la première étape de détermination d'un tronçon de bord d'attaque peut comporter les sous-étapes suivantes :
- définition d'un plan de coupe situé entre le bord d'attaque et le point d'épaisseur maximale du profil standard, et
- définition du tronçon de bord d'attaque par découpe du profil standard selon le plan de coupe, le tronçon de bord d'attaque comportant le bord d'attaque.

Le plan de coupe passe ainsi d'une part par un point de l'extrados du profil standard où la tangente à l'extrados présente un coefficient directeur positif et par un point de l'intrados du profil standard où la tangente à l'intrados présente un coefficient directeur négatif.

Le plan de coupe est par exemple situé à une distance du bord d'attaque comprise entre 20 et 45 % de la corde c du profil standard le long du segment *s* reliant le bord d'attaque et le bord de fuite du profil standard. De plus, le plan de coupe peut être perpendiculaire au segment *s*.

Le tronçon de bord d'attaque peut alors être défini par découpe du profil du profil standard selon le plan de coupe, le tronçon de bord d'attaque étant constitué par la partie du profil comprise entre le bord d'attaque et le plan de coupe.

Ensuite, le tronçon de bord de fuite de chaque profil du pied de pale, du col de pale et de la partie centrale de la zone profilée peut être déterminé par symétrie axiale du tronçon de bord d'attaque. Une symétrie axiale peut aussi être désignée « symétrie orthogonale ». Dans ce but, la deuxième étape de détermination d'un tronçon de bord de fuite peut comporter les sous-étapes suivantes :
- définition d'un segment *s* reliant le bord d'attaque et le bord de fuite du profil,
- définition d'un axe de symétrie AS, l'axe de symétrie AS étant une médiatrice du segment *s*, et
- définition du tronçon de bord de fuite par symétrie axiale du tronçon de bord d'attaque selon l'axe de symétrie AS.

Ces sous-étapes permettent notamment de définir l'axe de symétrie AS par rapport auquel la symétrie axiale du tronçon de bord d'attaque est réalisée afin de déterminer le tronçon de bord de fuite. Cet axe de symétrie AS est perpendiculaire au segment *s* et positionné au milieu de ce segment *s*.

Selon une réalisation, lors de la troisième étape de détermination du tronçon intermédiaire d'extrados, le tronçon intermédiaire d'extrados est déterminé de sorte à être tangent au tronçon de bord d'attaque et au tronçon de bord de fuite. Le tronçon intermédiaire d'extrados peut être défini par exemple par un polynôme de degré supérieur ou égal à deux ou encore par une courbe de Bézier.

De même, lors de la quatrième étape de détermination du tronçon intermédiaire d'intrados, le tronçon intermédiaire d'intrados est déterminé de sorte à être tangent au tronçon de bord d'attaque et au tronçon de bord de fuite. Le tronçon intermédiaire d'extrados peut être défini par exemple par un polynôme de degré supérieur ou égal à deux ou encore par une courbe de Bézier.

De plus, le tronçon intermédiaire d'extrados et le tronçon intermédiaire d'intrados peuvent être définis afin que l'épaisseur maximale du profil soit sensiblement inchangée par rapport au profil standard lorsque le tronçon de bord d'attaque est issu d'un profil standard. Toutefois, l'épaisseur maximale du profil peut être modifiée suite aux définitions du tronçon intermédiaire d'extrados et du tronçon intermédiaire d'intrados et comprise par exemple dans un intervalle [95%,105%] de l'épaisseur maximale du profil standard lorsque le tronçon de bord d'attaque est issu d'un profil standard.

Selon une réalisation, le tronçon intermédiaire d'extrados et le tronçon intermédiaire d'intrados peuvent être définis de sorte à être respectivement symétriques axialement par rapport à l'axe de symétrie AS. Chaque profil formé par un tronçon de bord d'attaque, un tronçon de bord de fuite et les tronçons intermédiaires d'extrados et d'intrados par la méthode selon l'invention sont ainsi symétriques axialement par rapport à l'axe de symétrie AS. Chaque profil peut ainsi être désigné « profil miroir » par rapport à l'axe de symétrie AS.

La présente invention vise également une pale pour un rotor d'un giravion, la pale s'étendant d'une part selon une direction longitudinale X en envergure d'une première extrémité destinée à être reliée à un moyeu du rotor vers une seconde extrémité libre et d'autre part selon une direction transversale Y d'un bord d'attaque vers un bord de fuite, la pale comportant un pied de pale, une zone profilée et un col de pale situé entre le pied de pale et la zone profilée, la pale comprenant une succession de profils.

Cette pale est remarquable en ce que pour le pied de pale, le col de pale et une partie centrale de la zone profilée, chaque profil comporte un tronçon de bord d'attaque et un tronçon de bord de fuite qui sont symétriques axialement l'un par rapport à l'autre selon l'axe de symétrie AS perpendiculaire à un segment *s* reliant le bord d'attaque au bord de fuite et positionné au milieu du segment *s*. Cette pale peut ainsi être définie et construite selon la méthode précédemment décrite.

De la sorte, pour le pied de pale, le col de pale et la partie centrale de la zone profilée, chaque profil est symétrique selon l'axe de symétrie AS.

La présente invention vise aussi un rotor pour giravion, le rotor comportant un moyeu et au moins deux pales telles que précédemment décrites.

La présente invention vise enfin un giravion comportant au moins un rotor muni d'au moins deux pales telles que précédemment décrites.

L'invention et ses avantages apparaîtront avec plus de détails dans le cadre de la description qui suit avec des exemples donnés à titre illustratif en référence aux figures annexées qui représentent :
- la figure 1, une vue en perspective d'un giravion selon l'invention,
- la figure 2, une vue en perspective d'une pale du giravion,
- la figure 3, une vue de détail en perspective de la pale,
- la figure 4, un graphique de performance de la pale,
- la figure 5, une section d'un profil miroir de la pale,
- la figure 6, un schéma synoptique d'un procédé selon l'invention.

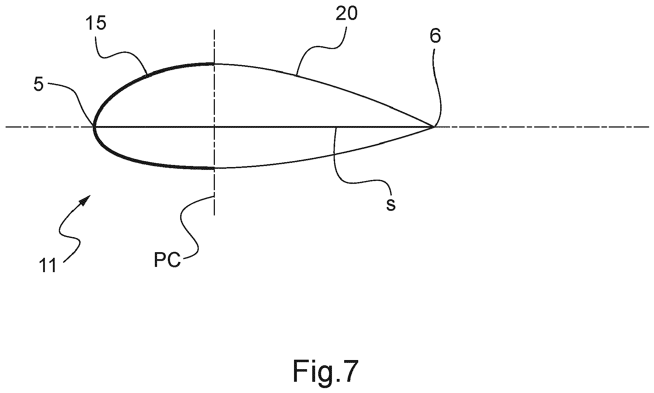

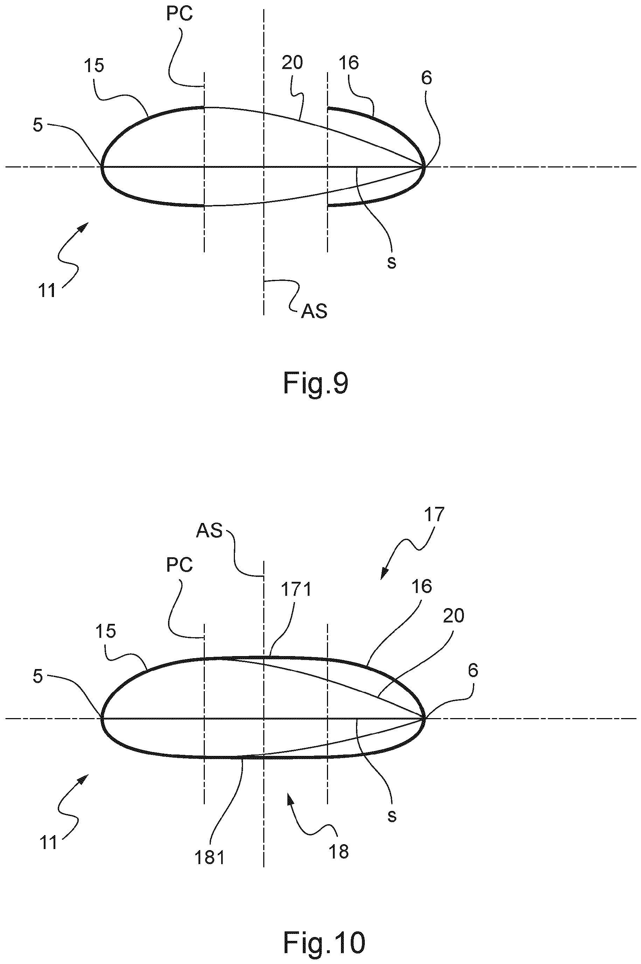

- les figures 7 à 9, des sections de profils miroirs de la pale, et
- la figure 10, un schéma synoptique d'un procédé selon l'invention.

Les éléments présents dans plusieurs figures distinctes sont affectés d'une seule et même référence.

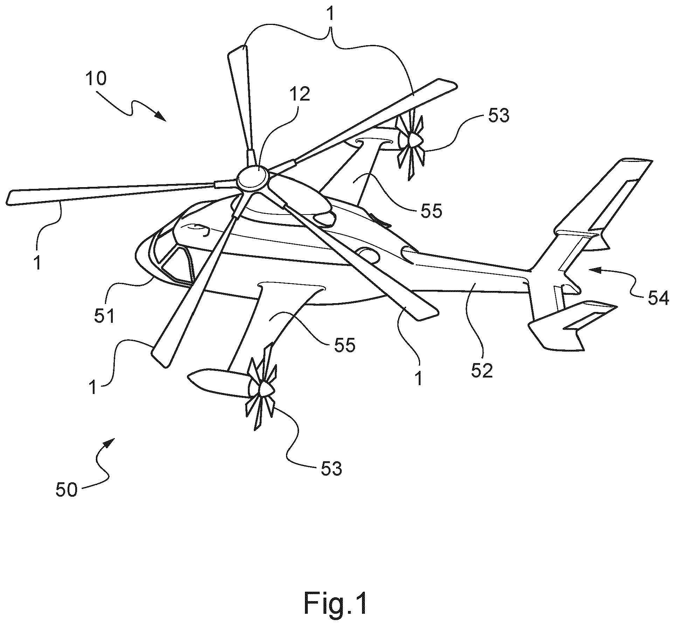

La figure 1 représente un giravion 50 comportant un fuselage 51 et un rotor principal 10 de sustentation. Un giravion 50 peut aussi comporter deux demi-ailes 55 positionnées de part et d'autre du fuselage 51, deux hélices d'avancement 53 agencées respectivement à l'extrémité d'une demi-aile 55, une poutre de queue 52 et un empennage 54. Le rotor principal 10 comporte un moyeu 12 tournant et des pales 1, par exemple cinq pales 1 comme représenté sur la figure 1.

Grâce à la présence des deux hélices d'avancement 53, ce giravion 50 peut voler avec de très grandes vitesses d'avancement de l'ordre de 200 à 250 noeuds.

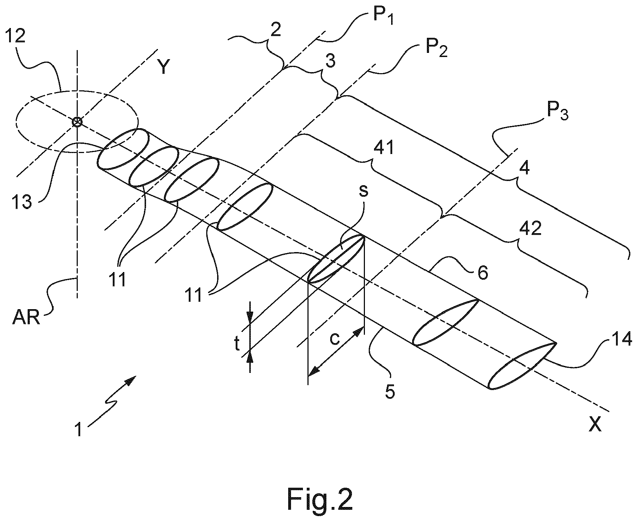

La figure 2 représente une pale 1 du rotor principal 10 de ce giravion 50. La pale 1 s'étend selon une direction longitudinale X en envergure d'une première extrémité 13 destinée à être reliée au moyeu 12 du rotor principal 10 vers une seconde extrémité 14 libre. La pale 1 comporte un pied de pale 2, une zone profilée 4 et un col de pale 3 situé, selon une direction longitudinale X en envergure, entre le pied de pale 2 et la zone profilée 4. Le pied de pale 2 comporte la première extrémité 13 et s'étend jusqu'à un premier plan P1. Le col de pale 3 s'étend du premier plan P1 jusqu'à un deuxième plan P2. La zone profilée 4 s'étend du deuxième plan P2 jusqu'à la seconde extrémité libre 14 de la pale 1. Les plans P1 et P2 sont par exemple perpendiculaires à la direction longitudinale X.

La pale 1 s'étend également selon une direction transversale Y, perpendiculaire à la direction longitudinale X, d'un bord d'attaque 5 vers un bord de fuite 6.

La pale 1 comporte une succession de profils 11 positionnées dans des plans parallèles à un plan transversal perpendiculaire à la direction longitudinale X en envergure. Chaque profil 11 comporte un extrados 17 et un intrados 18 reliant le bord d'attaque 5 et le bord de fuite 6. Chaque profil 11 peut être caractérisé par une corde c égale à la distance entre le bord d'attaque 5 et le bord de fuite 6, une épaisseur t égale à une distance maximale entre l'extrados 17 et l'intrados 18 mesurée perpendiculairement à un segment *s* reliant les bords d'attaque 5 et de fuite 6 du profil 11 ainsi qu'une épaisseur relative *t*/*c* égale au rapport de l'épaisseur *t* par la corde c.

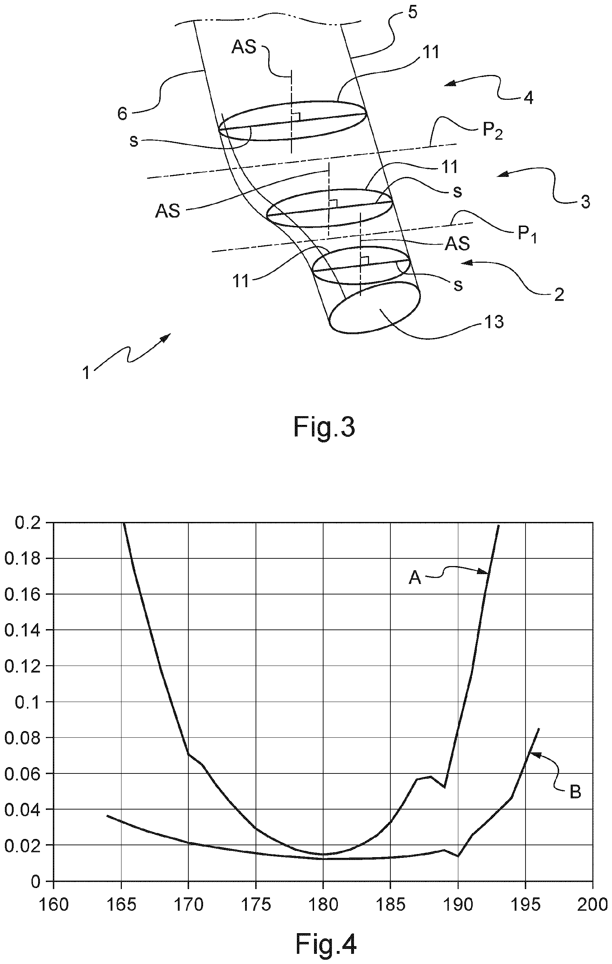

Le pied de pale 2, le col de pale 3 et partiellement la zone profilée 4 de la pale 1 sont représentés plus en détail sur la figure 3.

La zone profilée 4 de la pale 1 assure l'essentiel des performances aérodynamiques de la pale 1 et en particulier la force aérodynamique de portance générée lorsque la pale 1 est balayée par un flux d'air, notamment lors de la rotation de la pale 1 et/ou de l'avancement du giravion 50. Les profils 11 de la zone profilée 4 de la pale 1 peuvent être des profils dits « fin » avec une épaisseur relative inférieure à 13%. Cette zone profilée 4 représente une portion plus ou moins longue de la pale 1.

Le pied de pale 2 est destiné à être fixé au moyeu 12, éventuellement par l'intermédiaire d'un dispositif structurel de jonction. Les profils 11 de ce pied de pale 2 peuvent par exemple avoir une épaisseur relative par exemple comprise entre 50% et 100%.

Le col de pale 3 assure la jonction géométrique et structurelle entre le pied de pale 2 et la zone profilée 4. Les profils 11 de ce col de pale 3 peuvent par exemple avoir une épaisseur relative par exemple comprise entre 13% et 50%.

Sur le pied de pale 2, le col de pale 3 et une partie centrale 41 de la zone profilée 4 de la pale 1, chaque profil 11 est dit « miroir » et est symétrique axialement par rapport à un axe de symétrie AS, perpendiculaire au segment *s* et passant par le milieu de ce segment *s*. La partie centrale 41 de la zone profilée 4 s'étend du deuxième plan P2 jusqu'à un troisième plan P3 parallèle au deuxième plan P2.

Les profils sur la partie externe 42 de la zone profilée 4 de la pale 1, à savoir les profils situés entre le troisième plan P3 et la seconde extrémité 14 libre de la pale 1, peuvent avoir des profils dits « standards », par exemple comportant un tronçon de bord de fuite avec un bord de fuite 6 effilé ou fin. Un profil standard peut par exemple être défini selon les familles *NACA* ou bien les familles *OA.*

La partie externe 42 de la zone profilée 4 de la pale 1 comporte une zone de transition (non représentée), adjacente à la partie centrale 41 de la zone profilée 4, afin de passer progressivement de profils 11 miroirs à des profils standards.

De la sorte, les comportements des profils 11 miroirs, au niveau du pied de pale 2, du col de pale 3 et de la partie centrale 41 de la zone profilée 4 sont avantageusement similaires pour un même angle d'incidence de la pale 2, que les profils 11 miroirs soient balayés par un flux d'air circulant du bord d'attaque 5 vers le bord de fuite 6, ou inversement par un flux d'air circulant du bord de fuite 6 vers le bord d'attaque 5.

Le troisième plan P3 peut correspondre sensiblement à la limite externe du cercle d'inversion de rayon maximum pour le flux d'air balayant chaque pale 1 lors du vol du giravion 50. Ce rayon maximum est fonction de la vitesse maximale d'avancement du giravion et de la vitesse de rotation du rotor associée à la vitesse maximale d'avancement du giravion 50. Ce rayon maximum du cercle d'inversion est par exemple de l'ordre de 60% d'une envergure totale de la pale 1 depuis l'axe de rotation du rotor 10 pour le giravion 50 représenté sur la figure 1.

De plus, le cercle d'inversion est tangent à une direction longitudinale du giravion 50 au niveau de l'axe de rotation du rotor 10.

En conséquence, lors des vols d'avancement du giravion 50 à des vitesses d'avancement proches de sa vitesse maximale, le pied de pale 2, le col de pale 3 et la partie centrale 41 de la zone profilée 4 de chaque pale 1 reculante se situent dans le cercle d'inversion. Chaque pale 1 selon l'invention reculante a ainsi des performances aérodynamiques améliorées par rapport à une pale reculante comportant uniquement des profils standards.

Notamment, la force aérodynamique de portance générée par la pale 1 reculante est augmentée par rapport à une pale au bord de fuite effilée ou fin et la force aérodynamique de traînée générée par cette pale 1 reculante se trouve également réduite par rapport à une pale au bord de fuite effilée ou fin. Le point de décrochage aérodynamique d'une pale1 reculante se trouve également modifié ce qui contribue à améliorer le comportement aérodynamique de la pale 1.

De plus, le coefficient de moment d'une pale 1 reculante peut être réduit significativement selon l'angle d'incidence de la pale 1, comme le montre le graphique de la figure 4, grâce à la présence d'un tronçon de bord de fuite 16 plus épais qu'un tronçon de bord de fuite d'un profil standard. Ce graphique montre une première courbe A de variation du coefficient de moment d'une pale 1 reculante ayant uniquement de profils standards et une seconde courbe B de variation du coefficient de moment d'une pale 1 reculante selon l'invention. On constate que la seconde courbe B a une amplitude de variation plus faible que la première courbe A et est toujours située en dessous de la première courbe A. Une baisse de ce coefficient de moment de la pale 1 permet avantageusement de réduire les efforts de commande du pas de la pale 1.

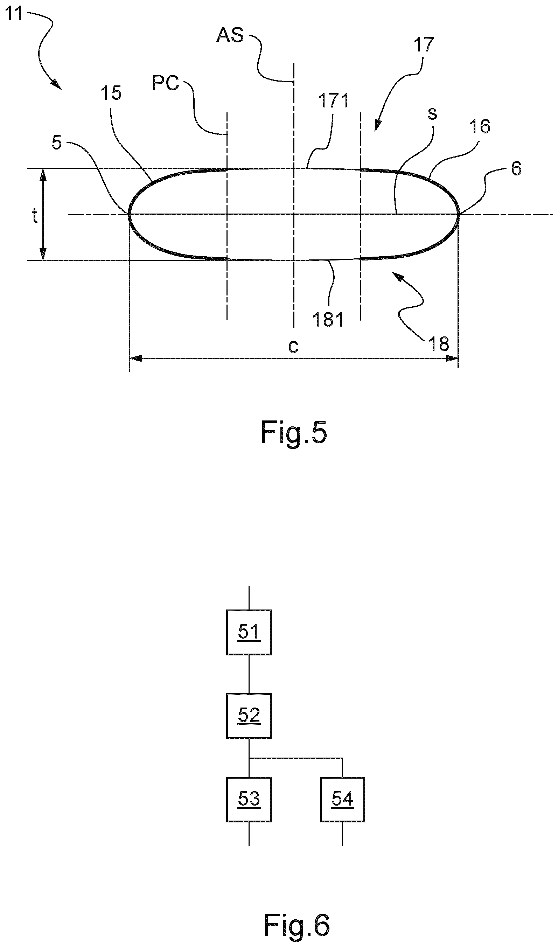

Un profil 11 miroir de la pale 1 est représenté sur la figure 5. Ce profil 11 miroir comporte un tronçon de bord d'attaque 15, un tronçon de bord de fuite 16, un tronçon intermédiaire d'extrados 171 et un tronçon intermédiaire d'intrados 181.

La pale 1 peut être construite par l'application d'une méthode de construction d'une pale 1 pour un rotor 10 d'un giravion 50. Cette méthode peut comporter quatre étapes principales 51-54 comme représenté sur le schéma synoptique de la figure 6.

Tout d'abord, une étape de détermination 51 d'un tronçon de bord d'attaque 15 de chaque profil 11 pour le pied de pale 2, le col de pale 3 et une partie centrale 41 de la zone profilée 4 est réalisée. Ce tronçon de bord d'attaque 15 s'étend depuis le bord d'attaque 5 jusqu'à un point en amont d'un point d'épaisseur maximale du profil 11. Par exemple, le tronçon de bord d'attaque 16 s'étend jusqu'à une distance du bord d'attaque 5 comprise entre 20 et 45% de la corde c du profil 11 sur le segment *s*.

Notamment, le tronçon de bord d'attaque 15 peut s'étendre du bord d'attaque 6 jusqu'à un plan de coupe PC perpendiculaire au segment *s*.

En outre, le tronçon de bord d'attaque 16 peut être issu d'un profil existant par exemple un profil standard 20.

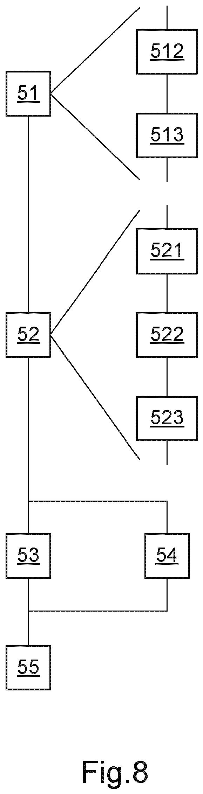

Dans ce cas, la première étape de détermination 51 d'un tronçon de bord d'attaque 15 peut comporter les sous-étapes suivantes selon le schéma synoptique représenté sur la figure 8 :
- une sous-étape de définition 512 d'un plan de coupe PC situé entre le bord d'attaque 5 et le point d'épaisseur maximale du profil aérodynamique 11, et
- une sous-étape de définition 513 du tronçon de bord d'attaque 15 par découpe du profil aérodynamique 11 selon le plan de coupe PC, le tronçon de bord d'attaque 15 comportant le bord d'attaque 5.

Le plan de coupe PC peut par exemple se situer à une position légèrement en amont de la position d'épaisseur maximale du profil 11, à savoir entre le bord d'attaque et ce point d'épaisseur maximale afin de garantir une convexité du profil 11 miroir, à savoir que l'extrados 17 et l'intrados 18 de chaque profil 11 sont convexes.

Ensuite, une étape de détermination 52 d'un tronçon de bord de fuite 16 de chaque profil 11 pour le pied de pale 2, le col de pale 3 et la partie centrale de la zone profilée 4 est réalisée par symétrie axiale du tronçon de bord d'attaque 15.

Lors de cette étape de détermination 52, une partie de profil symétrique axialement au tronçon de bord d'attaque 15 est alors rapportée au niveau du bord de fuite 6 pour former le tronçon de bord de fuite 16. Cette partie de profil symétrique au tronçon de bord d'attaque 15 est obtenue par symétrie axiale selon un axe de symétrie AS.

De plus, la deuxième étape de détermination 52 d'un tronçon de bord de fuite 16 peut comporter les sous-étapes suivantes détaillant l'obtention du tronçon de bord de fuite 16 :
- une sous-étape de définition 521 du segment *s* reliant le bord d'attaque 5 et le bord de fuite 6 du profil 11,
- une sous-étape de définition 522 de l'axe de symétrie AS, ledit axe de symétrie AS étant par exemple la médiatrice du segment *s*, et
- une sous-étape de définition 523 du tronçon de bord de fuite 16 par symétrie axiale du tronçon de bord d'attaque 15 selon l'axe de symétrie AS.

Ensuite, une étape de détermination 53 d'un tronçon intermédiaire d'extrados 171 raccordant le tronçon de bord d'attaque 15 et le tronçon de bord de fuite 16 afin de former un extrados 17 du profil 11 ainsi qu'une étape de détermination 54 d'un tronçon intermédiaire d'intrados 181 raccordant le tronçon de bord d'attaque 15 et le tronçon de bord de fuite 16 afin de former un intrados 18 du profil 11 sont réalisées.

Ces étapes de détermination 53,54 d'un tronçon intermédiaire d'extrados 171 et d'un tronçon intermédiaire d'intrados 181 peuvent être réalisées de façon simultanée ou bien de façon séquentielle alors que les étapes de détermination 51,52 d'un tronçon de bord d'attaque 15 et d'un tronçon de bord de fuite 16 de chaque profil 11 sont réalisées de façon séquentielle.

De plus, lors de la troisième étape de détermination 53 du tronçon intermédiaire d'extrados 171, le tronçon intermédiaire d'extrados 171 est tangent au tronçon de bord d'attaque 15 et au tronçon de bord de fuite 16. De même, lors de la quatrième étape de détermination 54 du tronçon intermédiaire d'intrados 181, le tronçon intermédiaire d'intrados 181 est tangent au tronçon de bord d'attaque 15 et au tronçon de bord de fuite 16. Les tronçons intermédiaires d'extrados 171 et d'intrados 181 permettent ainsi avantageusement la continuité en tangence entre les tronçons de bord d'attaque 15 et de bord de fuite 16 du profil 11. Les tronçons intermédiaires d'extrados 171 et d'intrados 181 peuvent être définis par exemple respectivement par un polynôme de degré supérieur ou égal à deux.

De plus, les tronçons intermédiaires d'extrados 171 et d'intrados 181 peuvent être respectivement symétriques axialement par rapport à l'axe de symétrie AS, de sorte que le profil 11 dans sa totalité est symétrique par rapport à l'axe de symétrie AS.

Les tronçons intermédiaires d'extrados 171 et d'intrados 181 peuvent également être définis de sorte que l'épaisseur maximale t du profil 11 de la pale 1 soit sensiblement identique à l'épaisseur maximale du profil standard 20 utilisé pour définir le tronçon de bord d'attaque 15. Toutefois, un faible changement de cette épaisseur maximale du profil standard 20 peut être obtenu, et correspondre à une variation en épaisseur par exemple de l'ordre de +/-5%.

Enfin, la présente invention a aussi pour objet une méthode de fabrication d'une pale pour un rotor d'un giravion visant à fabriquer la pale 1 selon les profils aérodynamiques 11 pour le pied de pale 2, le col de pale 3 et la partie centrale 41 de la zone profilée 4.

Dans ce but, la méthode de fabrication comporte les étapes de détermination 51 d'un tronçon de bord d'attaque 15 de chaque profil 11, de détermination 52 d'un tronçon de bord de fuite 16 de chaque profil 11, de détermination 53 d'un tronçon intermédiaire d'extrados 171 et de détermination 54 du tronçon intermédiaire d'intrados 181 ainsi qu'une étape 55 de fabrication de la pale 1.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles.

Notamment, bien que la pale 1 décrite appartienne à un rotor principal 10 d'un giravion 50, une pale 1 selon l'invention peut également être appliquée à un rotor auxiliaire, par exemple un rotor arrière anticouple.

## Revendications

1. Méthode de fabrication d'une pale (1) pour un rotor (10) d'un giravion (50), ladite pale (1) s'étendant d'une part selon une direction longitudinale (X) en envergure d'une première extrémité (13) destinée à être reliée à un moyeu (12) dudit rotor (10) vers une seconde extrémité (14) libre et d'autre part selon une direction transversale (Y) d'un bord d'attaque (5) vers un bord de fuite (6), ladite pale (1) comportant un pied de pale (2), une zone profilée (4) et un col de pale (3) situé entre ledit pied de pale (2) et ladite zone profilée (4), ladite pale (1) comprenant une succession de profils aérodynamiques (11), ladite méthode comportant les étapes suivantes :
- détermination (51) d'un tronçon de bord d'attaque (15) de chaque profil aérodynamique (11) pour ledit pied de pale (2), ledit col de pale (3) et une partie centrale (41) de ladite zone profilée (4) adjacente audit col de pale (3),
- détermination (52) d'un tronçon de bord de fuite (16) de chaque profil aérodynamique (11) pour ledit pied de pale (2), ledit col de pale (3) et ladite partie centrale (41) de ladite zone profilée (4) par symétrie axiale dudit tronçon de bord d'attaque (15),
- détermination (53) d'un tronçon intermédiaire d'extrados (171) raccordant ledit tronçon de bord d'attaque (15) et ledit tronçon de bord de fuite (16) afin de former un extrados (17) dudit profil aérodynamique (11),
- détermination (54) d'un tronçon intermédiaire d'intrados (181) raccordant ledit tronçon de bord d'attaque (15) et ledit tronçon de bord de fuite (16) afin de former un intrados (18) dudit profil aérodynamique (11), et
- fabrication (55) de ladite pale (1) selon lesdits profils aérodynamiques (11),
**caractérisé en ce que** ladite détermination dudit tronçon de bord de fuite de chaque profil aérodynamique pour ledit pied de pale, dudit col de pale et ladite partie centrale de ladite zone profilée par symétrie axiale dudit tronçon de bord d'attaque est réalisée selon un axe de symétrie (AS) perpendiculaire à un segment (s) reliant ledit bord d'attaque audit bord de fuite (6) et positionné au milieu dudit segment (s).

2. Méthode selon la revendication 1,
**caractérisée en ce que** ledit pied de pale (2), ledit col de pale (3) et ladite partie centrale (41) de ladite zone profilée (4) adjacente audit col de pale (3) s'étendent dans un cercle d'inversion de rayon maximum pour ledit giravion (50), ledit cercle d'inversion étant le lieu d'inversion du flux d'air balayant ladite pale (1) lors d'une rotation dudit rotor (10), ladite partie centrale (41) de ladite zone profilée (4) étant située entièrement dans ledit cercle d'inversion de rayon maximum, ledit rayon maximum étant fonction d'une vitesse maximale d'avancement dudit giravion (50) et d'une vitesse de rotation dudit rotor (10) associée à ladite vitesse maximale d'avancement dudit giravion (50).

3. Méthode selon la revendication 2,
**caractérisée en ce que** ledit cercle d'inversion est tangent à une direction longitudinale dudit giravion (50) au niveau d'un axe de rotation (AR) dudit rotor (10).

4. Méthode selon l'une quelconque des revendications 1 à 3,
**caractérisée en ce que** ladite partie centrale (41) de ladite zone profilée (4) adjacente audit col de pale (3) s'étend jusqu'à une distance inférieure ou égale à 60% d'une envergure totale de ladite pale (1) depuis un axe de rotation (AR) dudit rotor (10).

5. Méthode selon l'une quelconque des revendications 1 à 4, **caractérisée en ce que** ledit tronçon de bord d'attaque (15) s'étend depuis ledit bord d'attaque (5) jusqu'à un point en amont d'un point d'épaisseur maximale dudit profil aérodynamique (11).

6. Méthode selon l'une quelconque des revendications 1 à 4,
**caractérisée en ce que** ledit tronçon de bord d'attaque (15) s'étend sur une distance comprise entre 20 et 40% d'une corde (c) dudit profil aérodynamique (11) selon un segment (s) reliant ledit bord d'attaque (5) et ledit bord de fuite (6) dudit profil aérodynamique (11), ladite corde (c) étant égale à une distance entre ledit bord d'attaque (5) et ledit bord de fuite (6).

7. Méthode selon l'une quelconque des revendications 1 à 6,
**caractérisée en ce que** ladite étape de détermination (51) d'un tronçon de bord d'attaque (15) comporte les sous-étapes suivantes :
- définition (512) d'un plan de coupe situé entre ledit bord d'attaque (5) et le point d'épaisseur maximale d'un profil existant (20),
- définition (513) dudit tronçon de bord d'attaque (15) par découpe dudit profil existant (20) selon ledit plan de coupe, ledit tronçon de bord d'attaque (15) comportant ledit bord d'attaque (15).

8. Méthode selon la revendication 7,
**caractérisée en ce que** ledit plan de coupe est perpendiculaire à un segment (s) reliant ledit bord d'attaque (5) et ledit bord de fuite (6) dudit profil existant (20) et est situé à une distance dudit bord d'attaque (5) comprise entre 20 et 45% d'une corde (c) selon ledit segment (s), ladite corde (c) étant égale à une distance entre ledit bord d'attaque (5) et ledit bord de fuite (6).

9. Méthode selon l'une quelconque des revendications 1 à 8,
**caractérisée en ce que** ladite étape de détermination (52) d'un tronçon de bord de fuite (16) comporte les sous-étapes suivantes :
- définition (521) dudit segment (s) reliant ledit bord d'attaque (5) et ledit bord de fuite (6) dudit profil aérodynamique (11),
- définition (522) dudit axe de symétrie (AS), ledit axe de symétrie (AS) étant une médiatrice dudit segment (s), et
- définition (523) dudit tronçon de bord de fuite (16) par symétrie axiale dudit tronçon de bord d'attaque (15) selon ledit axe de symétrie (AS).

10. Méthode selon l'une quelconque des revendications 1 à 9,
**caractérisée en ce que** lors de ladite étape de détermination (53) dudit tronçon intermédiaire d'extrados (171), ledit tronçon intermédiaire d'extrados (171) est tangent audit tronçon de bord d'attaque (15) et audit tronçon de bord de fuite (16) et est défini par un polynôme de degré supérieur ou égal à deux et lors de ladite quatrième étape de détermination (54) dudit tronçon intermédiaire d'intrados (181), ledit tronçon intermédiaire d'intrados (181) est tangent audit tronçon de bord d'attaque (15) et audit tronçon de bord de fuite (16) et est défini par un polynôme de degré supérieur ou égal à deux.

11. Méthode selon la revendication 10,
**caractérisée en ce que** ledit tronçon intermédiaire d'extrados (171) et ledit tronçon intermédiaire d'intrados (181) sont symétriques par rapport audit axe de symétrie (AS).

12. Pale (1) pour un rotor (10) d'un giravion (50), ladite pale (1) s'étendant d'une part selon une direction longitudinale (X) en envergure d'une première extrémité (13) destinée à être reliée à un moyeu (12) dudit rotor (10) vers une seconde extrémité (14) libre et d'autre part selon une direction transversale (Y) d'un bord d'attaque (5) vers un bord de fuite (6), ladite pale (1) comportant un pied de pale (2), une zone profilée (4) et un col de pale (3) situé entre ledit pied de pale (2) et ladite zone profilée (4), ladite pale (1) comprenant une succession de profils aérodynamiques (11),
**caractérisée en ce que** pour ledit pied de pale (2), ledit col de pale (3) et une partie centrale (41) de ladite zone profilée (4), chaque profil aérodynamique (11) comporte un tronçon de bord d'attaque (15) et un tronçon de bord de fuite (16) qui sont symétriques l'un par rapport à l'autre selon un axe de symétrie (AS) perpendiculaire à un segment (s) reliant le bord d'attaque (5) au bord de fuite (6) et positionné au milieu dudit segment (s).

13. Pale (1) selon la revendication 12,
**caractérisée en ce que** pour ledit pied de pale (2), ledit col de pale (3) et ladite partie centrale (41) de ladite zone profilée (4) adjacente audit col de pale (3), chaque profil aérodynamique (11) est symétrique selon ledit axe de symétrie (AS).

14. Pale (1) selon l'une quelconque des revendications 12 à 13,
**caractérisée en ce que** ledit pied de pale (2), ledit col de pale (3) et ladite partie centrale (41) de ladite zone profilée (4) s'étendent dans un cercle d'inversion de rayon maximum pour ledit giravion (50), ledit cercle d'inversion étant le lieu d'inversion du flux d'air balayant ladite pale (1) lors d'une rotation dudit rotor (10), ladite partie centrale (41) de ladite zone profilée (4) étant située entièrement dans ledit cercle d'inversion de rayon maximum, ledit rayon maximum étant fonction d'une vitesse maximale d'avancement dudit giravion (50) et d'une vitesse de rotation dudit rotor (10) associée à ladite vitesse maximale d'avancement dudit giravion (50).

15. Pale (1) selon l'une quelconque des revendications 12 à 13,
**caractérisée en ce que** ladite partie centrale (41) de ladite zone profilée (4) s'étend jusqu'à une distance égale à 60% d'une envergure totale de ladite pale (1) depuis un axe de rotation (AR) dudit rotor (10).

16. Rotor (10) pour giravion (50), ledit rotor (10) comportant un moyeu (3) et au moins deux pales (1),
**caractérisé en ce que** chaque pale (2) est selon l'une quelconque des revendications 12 à 15.

17. Giravion (50) comportant au moins un rotor (10) muni d'au moins deux pales (2),
**caractérisé en ce que** lesdites pales (1) sont selon l'une quelconque des revendications 12 à 15.

## Patentansprüche

1. Verfahren zur Herstellung eines Blattes (1) für einen Rotor (10) eines Drehflügelflugzeugs (50), wobei sich das Blatt (1) einerseits in einer Längsrichtung (X) in Spannweite von einem ersten Ende (13), das dazu bestimmt ist, mit einer Nabe (12) des Rotors (10) verbunden zu werden, zu einem freien zweiten Ende (14) und andererseits in einer Querrichtung (Y) von einer Vorderkante (5) zu einer Hinterkante (6) erstreckt, wobei das Blatt (1) einen Blattfuß (2), einen profilierten Bereich (4) und einen Blatthals (3) aufweist, der sich zwischen dem Blattfuß (2) und dem profilierten Bereich (4) befindet, wobei das Blatt (1) eine Folge von aerodynamischen Profilen (11) aufweist,
wobei das Verfahren die folgenden Schritte umfasst:
- Festlegen (51) eines Vorderkantenabschnitts (15) jedes aerodynamischen Profils (11) für den Blattfuß (2), den Blatthals (3) und einen zentralen Teil (41) des profilierten Bereichs (4), der an den Blatthals (3) angrenzt,
- Festlegen (52) eines Hinterkantenabschnitts (16) jedes aerodynamischen Profils (11) für den Blattfuß (2), den Blatthals (3) und den zentralen Teil (41) des profilierten Bereichs (4) durch Axialsymmetrie des Vorderkantenabschnitts (15),
- Festlegen (53) eines Oberseiten-Zwischenabschnitts (171), der den Vorderkantenabschnitt (15) und den Hinterkantenabschnitt (16) verbindet, um eine Oberseite (17) des aerodynamischen Profils (11) zu bilden,
- Festlegen (54) eines Unterseiten-Zwischenabschnitts (181), der den Vorderkantenabschnitt (15) und den Hinterkantenabschnitt (16) verbindet, um eine Unterseite (18) des Flügelprofils (11) zu bilden, und
- Herstellen (55) des Blattes (1) gemäß den aerodynamischen Profilen (11),
**dadurch gekennzeichnet, dass** das Festlegen des Hinterkantenabschnitts jedes aerodynamischen Profils für den Blattfuß, den Blatthals und den zentralen Teil des profilierten Bereichs durch axiale Symmetrie des Vorderkantenabschnitts in Bezug auf eine Symmetrieachse (AS) erfolgt, die senkrecht zu einem Segment (s) verläuft, das die Vorderkante mit der Hinterkante (6) verbindet und in der Mitte des Segments (s) positioniert ist.

2. Verfahren nach Anspruch 1,
**dadurch gekennzeichnet, dass** der Blattfuß (2), der Blatthals (3) und der dem Blatthals (3) benachbarte zentrale Teil (41) des profilierten Bereichs (4) sich in einem Umkehrkreis mit maximalem Radius für den Drehflügler (50) erstrecken, wobei der Umkehrkreis der Ort der Umkehrung des das Blatt (1) überstreichenden Luftstroms bei einer Drehung des Rotors (10) ist, dass der zentrale Teil (41) des profilierten Bereichs (4) vollständig innerhalb des Umkehrkreises mit maximalem Radius liegt, wobei der maximale Radius eine Funktion einer maximalen Vorwärtsgeschwindigkeit des Drehflügelflugzeugs (50) und einer Drehgeschwindigkeit des Rotors (10) ist, die mit der maximalen Vorwärtsgeschwindigkeit des Drehflügelflugzeugs (50) assoziiert ist.

3. Verfahren nach Anspruch 2,
**dadurch gekennzeichnet, dass** der Umkehrkreis an einer Drehachse (AR) des Rotors (10) tangential zu einer Längsrichtung des Drehflügelflugzeugs (50) ist.

4. Verfahren nach einem der Ansprüche 1 bis 3,
**dadurch gekennzeichnet, dass** sich der zu dem Blatthals (3) benachbarte zentrale Teil (41) des profilierten Bereichs (4) bis zu einem Abstand von weniger als oder gleich 60% einer Gesamtspannweite des Blattes (1) von einer Drehachse (AR) des Rotors (10) erstreckt.

5. Verfahren nach einem der Ansprüche 1 bis 4,
**dadurch gekennzeichnet, dass** sich der Vorderkantenabschnitt (15) von der Vorderkante (5) bis zu einem Punkt stromaufwärts eines Punktes maximaler Dicke des aerodynamischen Profils (11) erstreckt.

6. Verfahren nach einem der Ansprüche 1 bis 4,
**dadurch gekennzeichnet, dass** sich der Vorderkantenabschnitt (15) über eine Strecke von 20 bis 40% einer Sehne (c) des Strömungsprofils (11) entlang eines Segments (s) erstreckt, das die Vorderkante (5) und die Hinterkante (6) des Strömungsprofils (11) verbindet, wobei die Sehne (c) gleich einem Abstand zwischen der Vorderkante (5) und der Hinterkante (6) ist.

7. Verfahren nach einem der Ansprüche 1 bis 6,
**dadurch gekennzeichnet, dass** der Schritt des Festlegens (51) eines Abschnitts der Vorderkante (15) die folgenden Teilschritte umfasst:
- Definieren (512) einer Schnittebene, die zwischen der Vorderkante (5) und dem Punkt der maximalen Dicke eines vorhandenen Profils (20) liegt,
- Definieren (513) des Vorderkantenabschnitts (15) durch Schneiden des vorhandenen Profils (20) entlang der Schnittebene, wobei der Vorderkantenabschnitt (15) die Vorderkante (15) umfasst.

8. Verfahren nach Anspruch 7,
**dadurch gekennzeichnet, dass** die Schnittebene senkrecht zu einem Segment (s) ist, das die Vorderkante (5) und die Hinterkante (6) des vorhandenen Profils (20) verbindet, und entlang des Segments (s) in einem Abstand von der Vorderkante (5) von zwischen 20 und 45% einer Sehne (c) liegt, wobei die Sehne (c) gleich einem Abstand zwischen der Vorderkante (5) und der Hinterkante (6) ist.

9. Verfahren nach einem der Ansprüche 1 bis 8,
**dadurch gekennzeichnet, dass** der Schritt des Festlegens (52) eines Hinterkantenabschnitts (16) die folgenden Teilschritte umfasst:
- Definieren (521) des Segments (s), das die Vorderkante (5) und die Hinterkante (6) des aerodynamischen Profils (11) verbindet,
- Definieren (522) der Symmetrieachse (AS), wobei die Symmetrieachse (AS) eine Mittelsenkrechte des Segments (s) ist, und
- Definieren (523) des Hinterkantenabschnitts (16) durch axiale Symmetrie des Vorderkantenabschnitts (15) entlang der Symmetrieachse (AS).

10. Verfahren nach einem der Ansprüche 1 bis 9,
**dadurch gekennzeichnet, dass** bei dem Schritt des Festlegens (53) des Oberseiten-Zwischenabschnitts (171) der Oberseiten-Zwischenabschnitt (171) tangential zu dem Vorderkantenabschnitt (15) und dem Hinterkantenabschnitt (16) ist und durch ein Polynom mit einem Grad größer oder gleich zwei definiert ist, und dass bei dem vierten Schritt des Festlegens (54) des Unterseiten-Zwischenabschnitts (181) der Unterseiten-Zwischenabschnitt (181) tangential zu dem Vorderkantenabschnitt (15) und dem Hinterkantenabschnitt (16) ist und durch ein Polynom mit einem Grad größer oder gleich zwei definiert ist.

11. Verfahren nach Anspruch 10,
**dadurch gekennzeichnet, dass** der Oberseiten-Zwischenabschnitt (171) und der Unterseiten-Zwischenabschnitt (181) in Bezug auf die Symmetrieachse (AS) symmetrisch sind.

12. Blatt (1) für einen Rotor (10) eines Drehflügelflugzeugs (50), wobei sich das Blatt (1) einerseits in einer Längsrichtung (X) in Spannweite von einem ersten Ende (13), das dazu bestimmt ist, mit einer Nabe (12) des Rotors (10) verbunden zu werden, zu einem zweiten, freien Ende (14) und andererseits in einer Querrichtung (Y) von einer Vorderkante (5) zu einer Hinterkante (6) erstreckt, wobei das Blatt (1) einen Blattfuß (2), einen profilierten Bereich (4) und einen zwischen dem Blattfuß (2) und dem profilierten Bereich (4) liegenden Blatthals (3) aufweist, wobei das Blatt (1) eine Folge von aerodynamischen Profilen (11) aufweist,
**dadurch gekennzeichnet, dass** für den Blattfuß (2), den Blatthals (3) und einen zentralen Teil (41) des profilierten Bereichs (4) jedes aerodynamische Profil (11) einen Vorderkantenabschnitt (15) und einen Hinterkantenabschnitt (16) umfasst, die zueinander in Bezug auf eine Symmetrieachse (AS) symmetrisch sind, die senkrecht zu einem Segment (s) verläuft, das die Vorderkante (5) mit der Hinterkante (6) verbindet, und in der Mitte des Segments (s) positioniert ist.

13. Blatt (1) nach Anspruch 12,
**dadurch gekennzeichnet, dass** für den Blattfuß (2), den Blatthals (3) und den zentralen Teil (41) des profilierten Bereichs (4), der an den Blatthals (3) angrenzt, jedes aerodynamische Profil (11) symmetrisch in Bezug auf die Symmetrieachse (AS) ist.

14. Blatt (1) nach einem der Ansprüche 12 bis 13,
**dadurch gekennzeichnet, dass** der Blattfuß (2), der Blatthals (3) und der zentrale Teil (41) des Profilbereichs (4) sich in einem Umkehrkreis mit maximalem Radius für das Drehflügelflugzeug (50) erstrecken, wobei der Umkehrkreis der Ort der Umkehrung des das Blatt (1) überstreichenden Luftstroms bei einer Drehung des Rotors (10) ist, wobei der zentrale Teil (41) des profilierten Bereichs (4) vollständig innerhalb des Umkehrkreises mit maximalem Radius liegt, wobei der maximale Radius eine Funktion einer maximalen Vorwärtsgeschwindigkeit des Drehflügelflugzeugs (50) und einer Drehgeschwindigkeit des Rotors (10) ist, die mit der maximalen Vorwärtsgeschwindigkeit des Drehflügelflugzeugs (50) assoziiert ist.

15. Blatt (1) nach einem der Ansprüche 12 bis 13,
**dadurch gekennzeichnet, dass** sich der zentrale Teil (41) des profilierten Bereichs (4) bis zu einem Abstand von 60% einer Gesamtspannweite des Blattes (1) von einer Drehachse (AR) des Rotors (10) erstreckt.

16. Rotor (10) für ein Drehflügelflugzeug (50), wobei der Rotor (10) eine Nabe (3) und mindestens zwei Blätter (1) aufweist, **dadurch gekennzeichnet, dass** jedes Blatt (2) gemäß einem der Ansprüche 12 bis 15 ist.

17. Drehflügelflugzeug (50), das mindestens einen Rotor (10) mit mindestens zwei Blättern (2) aufweist,
**dadurch gekennzeichnet, dass** die Blätter (1) nach einem der Ansprüche 12 bis 15 sind.

## Claims

1. A method for constructing a blade (1) for a rotor (10) of a rotorcraft (50), the blade (1) extending in a longitudinal direction (X) spanwise from a first end (13) intended to be connected to a hub (12) of the rotor (10) towards a second free end (14), and in a transverse direction (Y) from a leading edge (5) towards a trailing edge (6), the blade (1) comprising a blade root (2), a profiled zone (4) and a blade neck (3) situated between the blade root (2) and the profiled zone (4), the blade (1) comprising a series of aerodynamic profiles (11);
wherein the method comprises the following steps:
- determining (51) a leading edge section (15) of each aerodynamic profile (11) for the blade root (2), the blade neck (3) and a central part (41) of the profiled zone (4) adjacent to the blade neck (3);
- determining (52) a trailing edge section (16) of each aerodynamic profile (11) for the blade root (2), the blade neck (3) and the central part (41) of the profiled zone (4) by axial symmetry of the leading edge section (15);
- determining (53) an intermediate upper surface section (171) connecting the leading edge section (15) and the trailing edge section (16) in order to form an upper surface (17) of the aerodynamic profile (11);
- determining (54) an intermediate lower surface section (181) connecting the leading edge section (15) and the trailing edge section (16) in order to form a lower surface (18) of the aerodynamic profile (11), and
- manufacturing (55) of the blade (1) according to the aerodynamic profiles (11),
wherein the determining of the trailing edge section of each aerodynamic profile for the blade root, for the blade neck and the central part of the profiled zone by axial symmetry of the leading edge section is carried out along an axis of symmetry (AS) perpendicular to a segment (s) connecting the leading edge to the trailing edge (6) and positioned in the middle of the segment (s).

2. The method according to claim 1,
wherein the blade root (2), the blade neck (3) and the central part (41) of the profiled zone (4) adjacent to the blade neck (3) extend within an inversion circle of maximum radius for the rotorcraft (50), the inversion circle being the location of inversion of the air flow sweeping the blade (1) during a rotation of the rotor (10), the central part (41) of the profiled zone (4) being situated entirely within the inversion circle of maximum radius, the maximum radius depending on a maximum forward speed of the rotorcraft (50) and a speed of rotation of the rotor (10) associated with the maximum forward speed of the rotorcraft (50).

3. The method according to claim 2,
wherein the inversion circle is tangent to a longitudinal direction of the rotorcraft (50) at an axis of rotation (AR) of the rotor (10).

4. The method according to any one of claims 1 to 3,
wherein the central part (41) of the profiled zone (4) adjacent to the blade neck (3) extends up to a distance less than or equal to 60% of a total span of the blade (1) from an axis of rotation (AR) of the rotor (10).

5. The method according to any one of claims 1 to 4,
wherein the leading edge section (15) extends from the leading edge (5) to a point upstream from a point of maximum thickness of the aerodynamic profile (11).

6. The method according to any one of claims 1 to 4,
wherein the leading edge section (15) extends over a distance of between 20 and 40% of a chord (c) of the aerodynamic profile (11) according to a segment (s) connecting the leading edge (5) and the trailing edge (6) of the aerodynamic profile (11), the chord (c) being equal to a distance between the leading edge (5) and the trailing edge (6).

7. The method according to any one of claims 1 to 6,
wherein the step of determining (51) a leading edge section (15) comprises the following sub-steps:
- defining (512) a cutting plane situated between the leading edge (5) and the point of maximum thickness of an existing profile (20);
- defining (513) the leading edge section (15) by cutting the existing profile (20) along the cutting plane, the leading edge section (15) comprising the leading edge (15).

8. The method according to claim 7,
wherein the cutting plane is perpendicular to a segment (s) connecting the leading edge (5) and the trailing edge (6) of the existing profile (20) and is situated at a distance from the leading edge (5) of between 20 and 45% of a chord (c) according to the segment (s), the chord (c) being equal to a distance between the leading edge (5) and the trailing edge (6).

9. The method according to any one of claims 1 to 8,
wherein the step of determining (52) a trailing edge section (16) comprises the following sub-steps:
- defining (521) the segment (s) connecting the leading edge (5) and the trailing edge (6) of the aerodynamic profile (11);
- defining (522) the axis of symmetry (AS), the axis of symmetry (AS) being a right bisector of the segment (s), and
- defining (523) the trailing edge section (16) by axial symmetry of the leading edge section (15) according to the axis of symmetry (AS).

10. The method according to any one of claims 1 to 9,
wherein, during the step of determining (53) the intermediate upper surface section (171), the intermediate upper surface section (171) is tangent to the leading edge section (15) and to the trailing edge section (16) and is defined by a polynomial of degree greater than or equal to two and, during the fourth step of determining (54) the intermediate lower surface section (181), the intermediate lower surface section (181) is tangent to the leading edge section (15) and to the trailing edge section (16) and is defined by a polynomial of degree greater than or equal to two.

11. The method according to claim 10,
wherein the intermediate upper surface section (171) and the intermediate lower surface section (181) are symmetrical relative to the axis of symmetry (AS).

12. A blade (1) for a rotor (10) of a rotorcraft (50), the blade (1) extending in a longitudinal direction (X) spanwise from a first end (13) intended to be connected to a hub (12) of the rotor (10) towards a second free end (14), and in a transverse direction (Y) from a leading edge (5) towards a trailing edge (6), the blade (1) comprising a blade root (2), a profiled zone (4) and a blade neck (3) situated between the blade root (2) and the profiled zone (4), the blade (1) comprising a series of aerodynamic profiles (11);
wherein, for the blade root (2), the blade neck (3) and a central part (41) of the profiled zone (4), each aerodynamic profile (11) comprises a leading edge section (15) and a trailing edge section (16) that are symmetrical to each other along an axis of symmetry (AS) perpendicular to a segment (s) connecting the leading edge (5) to the trailing edge (6) and positioned in the middle of the segment (s).

13. The blade (1) according to claim 12,
wherein, for the blade root (2), the blade neck (3) and the central part (41) of the profiled zone (4) adjacent to the blade neck (3), each aerodynamic profile (11) is symmetrical along the axis of symmetry (AS).

14. The blade (1) according to any one of claims 12 to 13,
wherein the blade root (2), the blade neck (3) and the central part (41) of the profiled zone (4) extend within an inversion circle of maximum radius for the rotorcraft (50), the inversion circle being the location of inversion of the air flow sweeping the blade (1) during a rotation of the rotor (10), the central part (41) of the profiled zone (4) being situated entirely within the inversion circle of maximum radius, the maximum radius depending on a maximum forward speed of the rotorcraft (50) and a speed of rotation of the rotor (10) associated with the maximum forward speed of the rotorcraft (50).

15. The blade (1) according to any one of claims 12 to 13,
wherein the central part (41) of the profiled zone (4) extends up to a distance equal to 60% of a total span of the blade (1) from an axis of rotation (AR) of the rotor (10) .

16. A rotor (10) for a rotorcraft (50), the rotor (10) comprising a hub (3) and at least two blades (1),
wherein each blade (2) is according to any one of claims 12 to 15.

17. The rotorcraft (50) comprising at least one rotor (10) equipped with at least two blades (2),
wherein the blades (1) are according to any one of claims 12 to 15.
